# EUROPEAN PATENT APPLICATION

(11) **EP 4 333 103 A1**
(43) Date of publication of application: **06.03.2024**
(21) Application number: 22929232.1
(22) Date of filing: 05.07.2022
(51) Int. Cl.: H01M 4/13, H01M 10/0585

(54) **COMPOUND ELECTRODE SHEET, ELECTRODE ASSEMBLY, SECONDARY BATTERY AND ELECTRIC APPARATUS**

(71) Applicant: Contemporary Amperex Technology Co., Limited, Ningde City, Fujian 352100 (CN)
(72) Inventor: CHEN, Xingbu, Fujian 352100 (CN); SUN, Xin, Fujian 352100 (CN); WU, Lili, Fujian 352100 (CN); DONG, Miaomiao, Fujian 352100 (CN); LI, Xuan, Fujian 352100 (CN); YUN, Liang, Fujian 352100 (CN); LIU, Rundie, Fujian 352100 (CN); SONG, Peidong, Fujian 352100 (CN)
(74) Representative: Kraus & Lederer PartGmbB
(86) International application number: PCT/CN2022/103869
(87) International publication number: WO 2024/007148

(57) **Abstract**

The present application provides a compound electrode sheet, an electrode assembly, a secondary battery, and an electrical device. The compound electrode sheet includes two single electrode sheets, and each single electrode sheet includes: a current collector and an active material layer; the current collector is provided with a main body and a protrusion portion, the protrusion portion is arranged protruding out of the main body in an extension direction of the current collector, and the protrusion portions of two current collectors are fixedly connected; the active material layer is arranged on a surface of the main body; and the active material layers of the two single electrode sheets are arranged opposite to each other. The current collectors can be fixed relative to each other by fixedly connecting the protrusion portions of the two current collectors, which effectively alleviates the relative slipping of the electrode sheets during assembling the electrode sheets. At the same time, the main body and the protrusion portion are independent from each other, so that the fixing of the protrusion portion does not affect the arrangement of the active material layer on the surface of the main body, which avoids the problem of insufficient safety size reserved for the negative electrode sheet due to the relative slipping of the electrode sheets, and the safety of the battery is improved.

## Description

### TECHNICAL FIELD

The present application relates to the technical field of batteries, and more particularly to a compound electrode sheet, an electrode assembly, a secondary battery, and an electrical device.

### BACKGROUND

Lithium-ion batteries have become a major source of power for consumer electronics and electric vehicles due to their many advantages. With the increasing demands, the lithium-ion batteries are gradually developing towards fast charge, long life, high energy density and high safety.

At present, the lithium-ion battery cells mainly have two structures including a wound cell and a laminated cell. The positive and negative electrode sheets of the wound cell pack battery are made in continuous long sheets, and an isolation film is arranged between the positive and negative electrode sheets for separating, and the battery cell is made by winding. However, the battery made by this method will cause stress concentration at the place where the electrode sheet is bent, which will cause the deformation of the electrode sheets of the battery and affect the performance of the battery. The laminated cell pack battery is to cut the electrode roll of the produced positive and negative electrode sheets to produce the required size of the electrode sheets, and then the cut positive electrode sheet, the isolation film and the negative electrode sheet are laminated in a certain order to produce the cell. The laminated battery is provided with an electrode tab leading out of each layer, the internal resistance of the battery is less, the electron transmission rate is fast, and the heat dissipation performance is good, which is suitable for preparing large-capacity lithium-ion batteries. However, in the laminating process, due to the fact that there is no extrusion pressure between the positive electrode sheet and the isolation film, and between the negative electrode sheet and the isolation film, the electrode sheets are prone to slide under the action of gravity or vibration, the electrode sheets and the isolation film are misplaced, and the positive electrode sheet and the negative electrode sheet are misplaced, so that the negative electrode sheet cannot cover the positive electrode sheet, as a consequence, the capacity of a part of electrode sheets cannot be fully utilized, or the positive electrode sheet and the negative electrode sheet are caused to be contacted and short circuit is caused, which further leads to safety problems. In order to prevent misplacement between the electrode sheets and the isolation film, it usually uses a complex fixture to control the positions of the electrode sheets and the isolation film and prevent them from moving, and even manual operation is added to improve the alignment accuracy of the cells. This greatly reduces the production efficiency of the battery, and it is difficult to achieve a higher alignment accuracy, and misplacement of the electrode sheets may still occur during producing the lithium-ion battery, which causes declination of the battery capacity, and even cause safety accidents.

### SUMMARY

The present application provides a compound electrode sheet, an electrode assembly, a secondary battery, and an electrical device, in order to alleviate relative slipping in the process of assembling the electrode sheets.

A first aspect of the present application provides a compound electrode sheet, and the compound electrode sheet includes two single electrode sheets, and each single electrode sheet includes: a current collector and an active material layer; the current collector is provided with a main body and a protrusion portion, the protrusion portion is arranged protruding out of the main body in an extension direction of the current collector, and the protrusion portions of two current collectors are fixedly connected; the active material layer is arranged on a surface of the main body; and the active material layers of the two single electrode sheets are arranged opposite to each other.

The current collector of the compound electrode sheet of the present application is provided with a main body and a protrusion portion, and the main body is used to carry the active material layer. The protrusion portion is arranged protruding out of the main body, and the two current collectors are arranged opposite to each other. Therefore, the current collectors can be fixed relative to each other by fixedly connecting the protrusion portions of the two current collectors, which effectively alleviates the relative slipping of the electrode sheets during assembling the electrode sheets. At the same time, the main body and the protrusion portion are independent from each other, so the fixing of the protrusion portion does not affect the arrangement of the active material layer on the surface of the main body, which avoids the problem of insufficient safety size reserved for the negative electrode sheet due to the relative slipping of the electrode sheets, and the safety of the battery is improved. Moreover, the compound electrode sheet of the present application can be realized without a complex fixture, and will not increase the manual operation cost, and the production efficiency is high.

In any embodiment of the first aspect, the protrusion portions of the two current collectors are fixedly connected through an adhesive layer; alternatively, the adhesive layer is a thermoplastic polymer adhesive layer; alternatively, the thermoplastic polymer adhesive layer is selected from any one of a thermoplastic polypropylene adhesive layer, a thermoplastic aliphatic polyether polyurethane adhesive layer, a thermoplastic polyimide adhesive layer, and a thermoplastic vinyl distearamide adhesive layer. The protrusion portion is fixed by the adhesive layer, the process is simple and the insulation is good.

In any embodiment of the first aspect, the adhesive layer is filled between the protrusion portions, and/or the adhesive layer wraps the protrusion portions. The position of the adhesive layer can be can be achieved by adjusting the process operation.

In any embodiment of the first aspect, the protrusion portions of the two current collectors are welded. The current collectors are fixedly connected by welding, and the fixed effect is better and more lasting.

In any embodiment of the first aspect, the compound electrode sheet further includes an insulating layer wrapping a welding area of the protrusion portions. The welding area is covered by the insulating layer to avoid unnecessary short circuits caused by the protrusion portions in the electrode assembly.

In any embodiment of the first aspect, the insulating layer includes an inorganic filler and a binder; alternatively, the inorganic filler is selected from any one or more of a boehmite and a ceramic material; alternatively, the insulating layer includes 80% to 95% of the inorganic filler and 5% to 20% of the binder in percentage by weight. The inorganic insulating filler used in the insulating layer has low cost and good insulation effect, and which forms good covering and insulation on the welding area by combining with the binder.

In any embodiment of the first aspect, a plurality of protrusion portions are provided and spaced apart from each other; alternatively, the protrusion portions are arranged on at least one side of the main body; alternatively, a fixed connection area of each protrusion portion is in a range of 8mm² and 50mm², alternatively, a shape of the protrusion portion is a quadrilateral, and further alternatively, the shape of the protrusion portion is a rectangular. The more the protrusion portions are provided, the larger the fixed connection area, the better the fixed effect, but the higher the cost.

In any embodiment of the first aspect, the protrusion portion is continuously arranged along a circumferential direction of the main body to form an annular protrusion portion, and the annular protrusion portions of the two current collectors are continuously fixed and connected in the circumferential direction. The annular protrusion portion is continuously fixed and connected in the circumferential direction, and the fixing effect is more firm to avoid the poor contact between the two current collectors after the electrolyte enters. Moreover, when the lithium layer is arranged between the two current collectors, the erosion of the lithium layer caused by the electrolyte entering the sandwich layer between the two current collectors is effectively avoided.

In any embodiment of the first aspect, a width of the annular protrusion portion is 2mm to 5mm, which provides sufficient arrangement position for the adhesive layer or welding, and avoids the increase of electrode assembly volume caused by excessive protrusion portion.

In any embodiment of the first aspect, the compound electrode sheet further includes a lithium layer, the current collectors are porous current collectors, the lithium layer is arranged between the main bodies of the two current collectors, and the two single electrode sheets are negative electrode sheets. When a lithium layer is provided, the preferred protrusion portion is an annular protrusion portion, and the annular protrusion portion is continuously fixed and connected in the circumferential direction to effectively avoid the erosion of the lithium layer caused by the electrolyte entering the sandwich layer between the two current collectors.

In any embodiment of the first aspect, the current collector is further provided with an electrode tab, and the electrode tab is arranged on the main body or is arranged on a part of an end of the protrusion portion away from the main body; alternatively, the main body, the protrusion portion, and the electrode tab are arranged integrally, so as to facilitate the encapsulation of the electrode assembly.

In any embodiment of the first aspect, one of the two single electrode sheets is a positive electrode sheet, and another one of the two single electrode sheets is a negative electrode sheet, alternatively, the current collector of the positive electrode sheet is an aluminum foil, and the current collector of the negative electrode sheet is a copper foil. The compound electrode sheet formed by the embodiment is a series electrode sheet, so that there is only need that the electrode tabs being led out of the positive electrode sheet and the negative electrode sheet of the outermost layer are connected with the external circuit when the cell is arranged, and the compound electrode sheet in the middle does not need to lead out an electrode tab. In addition, when the compound electrode sheet is applied to a secondary battery, the electrolyte uses a gel electrolyte or a solid electrolyte to insulate the ions between the positive and negative electrodes of the compound electrode sheet to avoid internal short circuits.

In a second aspect of the present application, an electrode assembly is provided, and the electrode assembly includes electrode sheets and an isolation film; and each of the electrode sheets includes a compound electrode sheet as described in any one of above. Since the compound electrode sheet of the present application avoids the problem of insufficient safety size reserved for the negative electrode sheet due to the relative slipping of the electrode sheets during assembling of the electrode sheets, thus the safety of the battery is improved.

In any embodiment of the second aspect, the compound electrode sheets are compound negative electrode sheets, each of the compound electrode sheets further includes a lithium layer, the current collector is porous current collector, and the lithium layer is arranged between the main body of the current collector; the electrode assembly includes the compound negative electrode sheet, a double-sided positive electrode sheet, and the isolation film arranged between the compound negative electrode sheet and the double-sided positive electrode sheet that are sequentially laminated.

In any embodiment of the second aspect, one of the single electrode sheets in the compound electrode sheet is a positive electrode sheet, and another one of the single electrode sheets is a negative electrode sheet, and the electrode assembly includes the compound electrode sheet and the isolation film arranged between the positive electrode sheet and the negative electrode sheet of the compound electrode sheet.

In any embodiment of the second aspect, the electrode assembly is a cell, the cell is a wound cell, and the protruding portion of the compound electrode sheet in the wound cell is arranged at both ends of the wound cell.

In any embodiment of the second aspect, the electrode assembly is a cell, the cell is a laminated cell, and the protruding portion of the compound electrode sheet in the wound cell is arranged at any one side wall of the laminated cell. For example, arranged at a long side wall and/or a short side wall.

In a third aspect of the present application, a secondary battery is provided, and the secondary battery includes the compound electrode sheet as described in any one above or the electrode assembly as described in any one above.

In a fourth aspect of the present application, an electrical device is provided, and the electrical device includes a secondary battery selected from the secondary battery as described above.

Since the compound electrode sheet of the present application avoids the problem of insufficient safety size reserved for the negative electrode sheet due to the relative slipping of the electrode sheets during assembling of the electrode sheets, and the safety of the battery is improved; thus the electrical device provided with the compound electrode sheet also has a better safety.

### BRIEF DESCRIPTION OF THE DRAWINGS

In order to explain the embodiments of the present application more clearly, a brief introduction regarding the accompanying drawings that need to be used for describing the embodiments of the present application or the prior art is given below; it is obvious that the accompanying drawings described as follows are only some embodiments of the present application, for those skilled in the art, other drawings can also be obtained according to the current drawings on the premise of paying no creative labor.
FIG. 1 is a cross-sectional schematic diagram of a compound electrode sheet provided by an embodiment;
FIG. 2 is a cross-sectional schematic diagram of a compound electrode sheet at A-A' as shown in FIG. 1;
FIG. 3 is another cross-sectional schematic diagram of a compound electrode sheet at A-A' as shown in FIG. 1;
FIG. 4 is a further cross-sectional schematic diagram of a compound electrode sheet at A-A' as shown in FIG. 1;
FIG. 5 is a cross-sectional schematic diagram of a compound electrode sheet provided by another embodiment;
FIG. 6 is a cross-sectional schematic diagram of a compound electrode sheet provided by a further embodiment;
FIG. 7 is a cross-sectional schematic diagram of a compound electrode sheet provided by a yet further embodiment;
FIG. 8 is a cross-sectional schematic diagram of an electrode assembly provided by an embodiment of the present application;
FIG. 9 is a cross-sectional schematic diagram of an electrode assembly provided by another embodiment of the present application;
FIG. 10 is a schematic view of a secondary battery in an embodiment of the present application;
FIG. 11 is an explosive view of a secondary battery in an embodiment of the present application as shown in FIG. 10;
FIG. 12 is a schematic view of a battery module in an embodiment of the present application;
FIG. 13 is a schematic view of a battery pack in an embodiment of the present application;
FIG. 14 is an explosive view of a battery pack in an embodiment of the present application as shown in FIG. 13; and
FIG. 15 is a schematic view of an electrical device in which a secondary battery is used as a power source in an embodiment of the present application.

In the accompanying drawings, the drawings are not drawn to the actual scale.

The reference numerals are listed:
10-current collector; 11-main body; 12-protrusion portion; 20-active material layer; 31-adhesive layer; 32-insulating layer; 40-lithium layer; 01-compound negative electrode sheet; 02-double-sided positive electrode sheet; 03-isolation film; 04-compound electrode sheet; 1-battery pack; 2-upper box; 3-bottom box; 4-battery module; 5-secondary battery; 51-shell; 52-electrode assembly; 53-top cap component.

### DETAILED DESCRIPTION OF EMBODIMENTS

The implementation of the present application is described in further detail below in conjunction with the attached drawings and embodiments. The detailed description and drawings of the following embodiments are used to illustrate the principles of the present application by example, but shall not be used to limit the scope of the present application, i.e. the present application is not limited to the embodiments described.

The following, with appropriate reference to the attached drawings, details the embodiments of the compound electrode sheet, the electrode assembly, the secondary battery, the battery module, the battery pack and the electrical device specified the present application are disclosed. However, there are cases where unnecessary details are omitted. There are instances, for example, of omitting detailed descriptions of matters that are already well known, of repeating descriptions of virtually the same structure. This is to avoid the following instructions becoming unnecessarily lengthy and to facilitate the understanding of those skilled in the art. In addition, the drawings and the following instructions are provided for the full understanding of the present application by those skilled in the art and are not intended to limit the subject matter described in the claims.

The "range" disclosed in the present application is defined in the form of a lower and upper limit, and the given range is defined by the selection of a lower limit and an upper limit, which define the boundaries of the particular range. The range qualified in this way can include or exclude end values, and can be arbitrarily combined, that is, any lower limit can be combined with any upper limit to form a range. For example, if the ranges 60-120 and 80-110 are listed for a particular parameter, it is understood that the ranges 60-110 and 80-120 are also expected. In addition, if the minimum range values 1 and 2, and the maximum range values 3,4 and 5 are listed, the following ranges can all be expected: 1-3, 1-4, 1-5, 2-3, 2-4, and 2-5. In the present application, unless otherwise stated, the numerical range "a-b" represents an abbreviated representation of any combination of real numbers between a and b, where both a and b are real numbers. For example, the numerical range "0-5" indicates that all real numbers between "0-5" have been listed in this article, and "0-5" is only an abbreviated representation of the combination of these values. In addition, when a parameter is expressed as an integer "≥2", it is equivalent to disclose the parameter as, for example, the integers 2, 3, 4, 5, 6, 7, 8, 9, 10, 11, and 12, etc.

Unless otherwise specified, all embodiments of the present application and alternative embodiments can be combined to form new technical solutions.

Unless otherwise specified, all technical features of the present application and alternative technical features can be combined to form a new technical solution.

Unless otherwise specified, all steps of the present application may be carried out sequentially or randomly, preferably be carried out sequentially. For example, the method includes steps (a) and (b), indicating that the method may include sequential steps (a) and (b) or sequential steps (b) and (a). For example, the mentioned method may also include step (c), indicating that the step (c) can be added to the method in any order, for example, the method can include steps (a), (b) and (c), or steps (a), (c) and (b), or steps (c), (a) and (b), etc..

References to "include" and "contain" in the present application mean opened, or closed, unless otherwise specified. For example, the words "include" and "contain" can indicate that other components not listed may also be included or contained, or only the listed components may be included or contained.

Unless otherwise stated, in the present application the term "or" is inclusive. For example, the phrase "A or B" means "A, B, or A and B." More specifically, any one of the following conditions are satisfied the "A or B" : A is true (or exists) and B is false (or does not exist); A is false (or does not exist) and B is true (or exists); or both A and B are true (or exist).

### [Secondary battery]

The secondary battery, also known as the rechargeable battery or the storage battery, refer to a battery that can be activated by charging the active material after the battery is discharged and continue to use it.

Generally, the secondary battery includes a positive electrode sheet, a negative electrode sheet, an isolation film, and an electrolyte. During the charging and discharging of a battery, active ions (such as lithium ions or sodium ions) are inserted and removed from the positive and negative electrode sheets. The isolation film is arranged between the positive electrode sheet and the negative electrode sheet, which mainly prevents the short circuit of the positive and negative electrodes, and enables the active ions to pass through. The electrolyte mainly conducts active ions between the positive and negative electrode sheets.

In the present application, the positive electrode sheet and/or negative electrode sheet of a secondary battery may be presented in the form of compound electrode sheet as described below.

### [Compound electrode sheet]

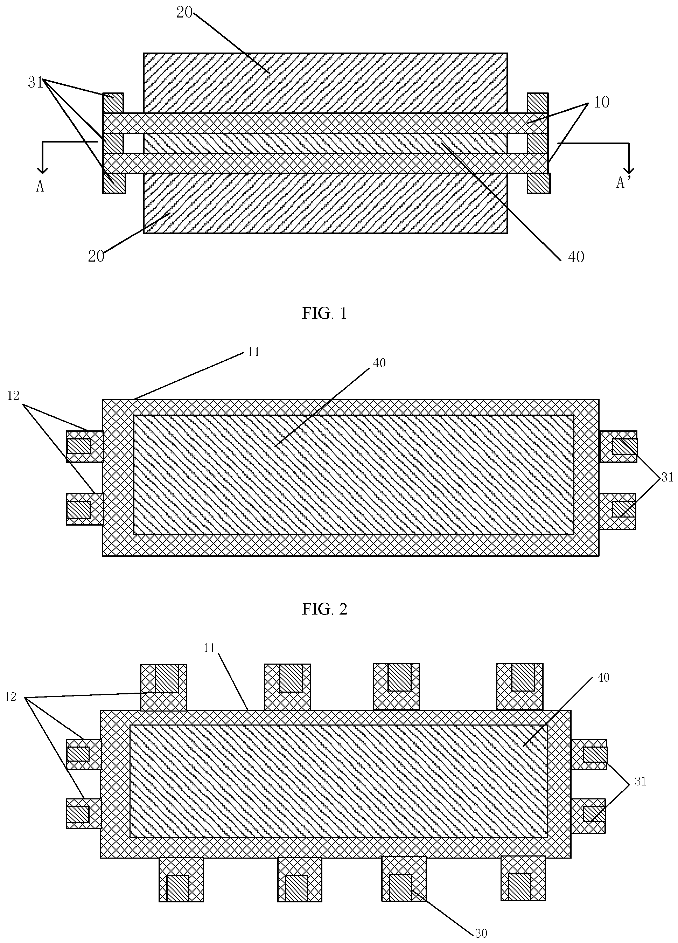

An embodiment of the present application provides a compound electrode sheet, as shown in FIGS. 1 to 7, the compound electrode sheet includes two single electrode sheets, and each single electrode sheet includes: a current collector 10 and an active material layer 20, the current collector 10 is provided with a main body 11 and a protrusion portion 12, the protrusion portion 12 is arranged protruding out of the main body 11 in an extension direction of the current collector 10, and the protrusion portions 12 of two current collectors 10 are fixedly connected; the active material layer 20 is arranged on a surface of the main body 11, and the active material layers 12 of the two single electrode sheets are arranged opposite to each other.

The current collector 10 of the compound electrode sheet of the present application is provided with a main body 11 and a protrusion portion 12, as shown in FIGS. 2 to 4, the main body 11 is used to carry the active material layer 20. The protrusion portion 12 is arranged protruding out of the main body 11, and the two current collectors 10 are arranged opposite to each other. Therefore, the current collectors 10 can be fixed relative to each other by fixedly connecting the protrusion portions 12 of the two current collectors 10, which effectively alleviates the relative slipping of the electrode sheets during assembling the electrode sheets. At the same time, the main body 11 and the protrusion portion 12 are independent from each other, so the fixing of the protrusion portion 12 does not affect the arrangement of the active material layer 20 on the surface of the main body 11, which avoids the problem of insufficient safety size reserved for the negative electrode sheet due to the relative slipping of the electrode sheets, and the safety of the battery is improved. Moreover, the compound electrode sheet of the present application can be realized without a complex fixture, and will not increase the manual operation cost, and the production efficiency is high.

The fixed connection of protrusion portion 12 can be achieved in a variety of ways, such as bonding or welding.

In some embodiments, as shown in FIG. 1, the protrusion portions 12 of the two current collectors 10 are fixedly connected by an adhesive layer 31. Alternatively, the adhesive layer 31 can be an insulating adhesive layer or a conductive adhesive layer. The protrusion portion 12 is fixed by adhesive layer 31, which has simple process and good insulation.

After the adhesive layer 31 is used, in order to avoid the limitation of ductility of the current collector 10 caused by bonding, Alternatively, the adhesive layer 31 is a thermoplastic polymer layer, which has high elasticity, so that the thermoplastic polymer layer can comply with the ductility of the current collector 10 and meet the requirements for the preparation of the electrode assembly by the compound electrode sheet. Alternatively, the thermoplastic polymer layer 31 is selected from any of the thermoplastic polypropylene layer, the thermoplastic aliphatic polyether polyurethane layer, the thermoplastic polyimide layer, and the thermoplastic vinyl distearamide layer. Each type of thermoplastic polymer layers is formed from known thermoplastic polymer materials, and each thermoplastic polymer layer has chemical resistance, heat resistance, electrical insulation, high strength mechanical properties and good high wear resistance.

When the adhesive layer 31 is used to fixedly connect the protrusion portion 12, the adhesive layer 31 can be arranged on protrusion portion 12 in a variety of ways, such as the adhesive layer 31 fills between the protrusion portions 12, and/or the adhesive layer 31 wraps the protrusion portions 12. The position of the adhesive layer 31 can be achieved by adjusting the process operation.

When the adhesive layer 31 is filled between the protrusion portions 12, after completing the arranging of one electrode sheet, the thermoplastic polymer adhesive is arranged on the protrusion portion 12, and then the protrusion portion 12 of the other electrode sheet is hot pressed and bonded to the protrusion portion 12 of previous electrode sheet, and then being cooled. At this time, the adhesive layer 31 can be an insulating adhesive layer 31 or a conductive adhesive layer 31.

When the adhesive layer 31 wraps the protrusion portion 12 or is arranged between the protrusion portions 12 and wraps the protrusion portion 12 at the same time, after the two single electrode sheets are aligned, and then a glue is dispensed or coated or dipped on the protrusion portion 12, and then hot pressing bonding and cooling are performed. In this case, the adhesive layer 31 can be an insulating adhesive layer or a conductive adhesive layer, and it is preferable to be an insulating adhesive layer.

When a thermoplastic polymer layer 31 is used to bond the protrusion portions 12, the separation of the two current collectors 10 can be completed by heating the thermoplastic polymer layer 31 during the recovery of the electrode sheets.

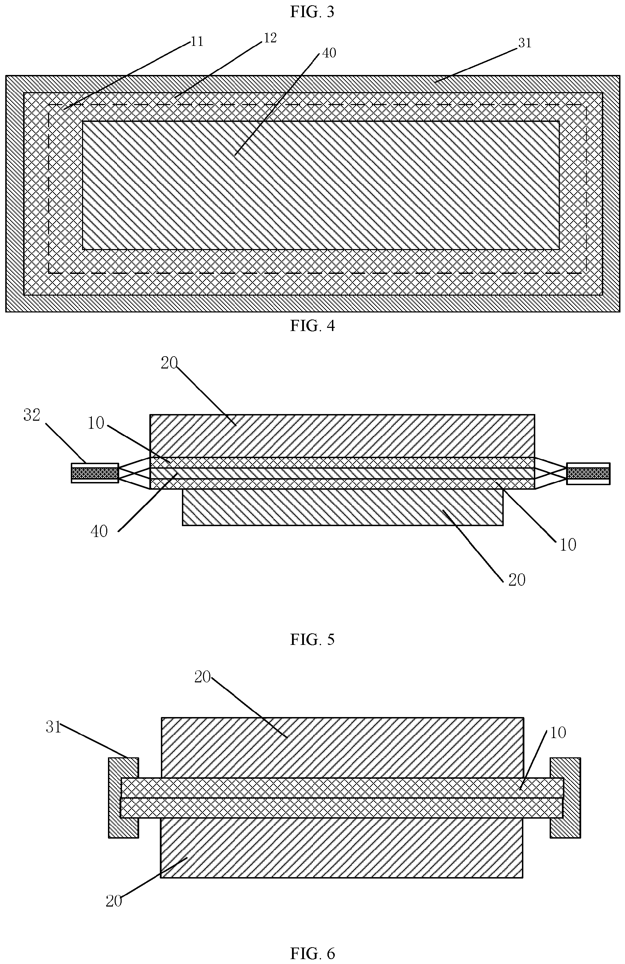

In some embodiments, as shown in FIG. 5, the protrusion portions 12 of two current collectors 10 are welded. The current collectors 10 are fixedly connected by welding, and the fixed effect is better and more lasting. The protrusion portions 12 can be welded by continuous ultrasonic welding, and the specific welding process can be referred to the continuous ultrasonic welding process of the prior art, and the details will not be repeated.

when the protrusion portions 12 of two current collectors 10 are welded, as shown in FIG. 5, the compound electrode sheet further includes an insulating layer 32 wrapping a welding area of the protrusion portions 12. The welding area is covered by the insulating layer 32 to avoid unnecessary short circuits caused by the protrusion portions 12 in the electrode assembly.

The insulating layer 32 can be used as a reference to the insulating layer 32 commonly used in lithium batteries, such as the use of inorganic insulation materials for insulating, in some embodiments, the insulating layer 32 includes inorganic fillers and binder dispersants. Since the inorganic fillers and binder dispersants are used for the insulating layer, they are both insulating materials. Alternatively, the inorganic filler is selected from any one or more of a boehmite and a ceramic material; the ceramic material includes but is not limited to alumina, magnesium oxide, zinc oxide, silicon oxide, titanium oxide, zirconia, aluminum nitride, silicon nitride, calcium fluoride and barium fluoride. The inorganic insulating filler used in the insulating layer 32 has low cost and good insulation effect, and which forms good covering and insulation on the welding area by combining with the binder. Alternatively, the insulating layer 32 includes 80% to 95% of the inorganic filler and 5% to 20% of the binder in percentage by weight. The above binder can be selected from the common binders of the lithium battery, such as at least one of a polyvinylidene fluoride, a polyvinylidene fluoride, a vinylidene fluoride - hexafluoropropylene copolymer, a styrene butadiene rubber, a polyacrylic acid, a polyethylene oxide, and a polyvinyl alcohol. In addition, the insulating layer can also include a dispersant with a weight percentage of 0% to 2% to promote the uniform dispersion of the inorganic filler in the binder, and the dispersant can also be selected from the commonly used dispersants of the lithium battery, such as at least one of a carboxymethyl cellulose sodium, a polyethylene pyrrolidone, and a styrene acrylate, stc.. For the preparation of the insulating layer, the inorganic filler, the binder and optional dispersant are dispersed in a solvent to form a slurry, the slurry is then coated on the surface of the welding area of the protrusion portion and the insulating layer can be obtained after the slurry is dried. The solvent may be N-methylpyrrolidone (NMP) or deionized water.

When the current collectors 10 are fixed by using the protrusion portions, generally, the larger the fixed connection area, the better the fixed effect, but the higher the cost.

In some embodiments, as shown in FIG. 2 or FIG. 3, a plurality of protrusion portions 12 are provided and spaced apart from each other, the plurality of protrusion portions 12 are spaced apart from each other, such as spaced apart from each other in an equal distance. Alternatively, the protrusion portions 12 are arranged on at least one or more sides of the main body 11, such as the protrusion portions 12 on the same side are spaced apart from each other in an equal distance, so that the bonding force is more evenly distributed over the entire current collector 10, thus the relative slipping of the electrode sheets can be better avoided. In order to improve the fixing effect of each protrusion portion 12, alternatively, a fixed connection area of each protrusion portion is 8mm² to 50mm². Of course, if the fixed connection area of each protrusion portion 12 is less than 8mm², the number and layout density of the fixed connection area can be appropriately increased. Alternatively, a shape of protrusion portion 12 is quadrilateral and further alternatively a rectangular.

In some embodiments, as shown in FIG. 4, the protrusion portion 12 is continuously arranged along a circumferential direction of the main body 11 to form an annular protrusion portion 12, and the annular protrusion portions 12 of the two current collectors 10 are continuously fixed and connected in the circumferential direction. The annular protrusion portion 12 is continuously fixed in the circumferential connection, the fixing effect is more firm, and it can also avoid the poor contact between the two current collectors 10 after the electrolyte enters. Moreover, when the lithium layer 40 is arranged between the two current collectors 10, the erosion of the lithium layer 40 caused by the electrolyte entering the sandwich layer between the two current collectors 10 is effectively avoided.

In some embodiments, a width of the annular protrusion portion 12 is 2mm to 5mm, which provides sufficient arrangement position for the adhesive layer 31 or welding, and avoids the increase of electrode assembly volume caused by excessive protrusion portion 12. Of course, if the width of the annular protrusion portion 12 is less than 2mm, it can also meet the requirements of sealing to form a sandwich layer.

The compound electrode sheet of the present application can also be structurally designed according to different functional requirements. For example, in the case of a compound electrode sheet of a lithium ion secondary battery, in some embodiments, as shown in FIG. 1 and FIG. 5, the compound electrode sheet also includes a lithium layer 40, a current collector 10 is a porous current collector, the lithium layer 40 is arranged between the main bodies 11 of two current collectors 10, and the two single electrode sheets are negative electrode sheets. When the lithium layer 40 is provided, a lithium replenishment compound electrode sheet is formed. In order to meet the rule of positive electrode area being less than the negative electrode area when the conventional electrode assembly is assembled, the two single electrode sheets are preferably negative electrode sheets.

When the lithium layer 40 is provided, in order to further improve the lithium replenishment effect of the lithium layer 40, it is preferred that the protrusion portion 12 is an annular protrusion portion 12, and the annular protrusion portion 12 is continuously fixed and connected to effectively avoid the erosion of the lithium layer 40 caused by the electrolyte entering the sandwich layer between the two current collectors 10.

Corresponding to the lithium replenishment compound electrode sheet, the current collector 10 optionally provides with an electrode tab arranged on the main body or on a part of an end of the protrusion portion 12 away from the main body 11, and alternatively, the main body 11, the protrusion portion 12 and the electrode tab are arranged integrally, so as to facilitate the encapsulation of the electrode assembly.

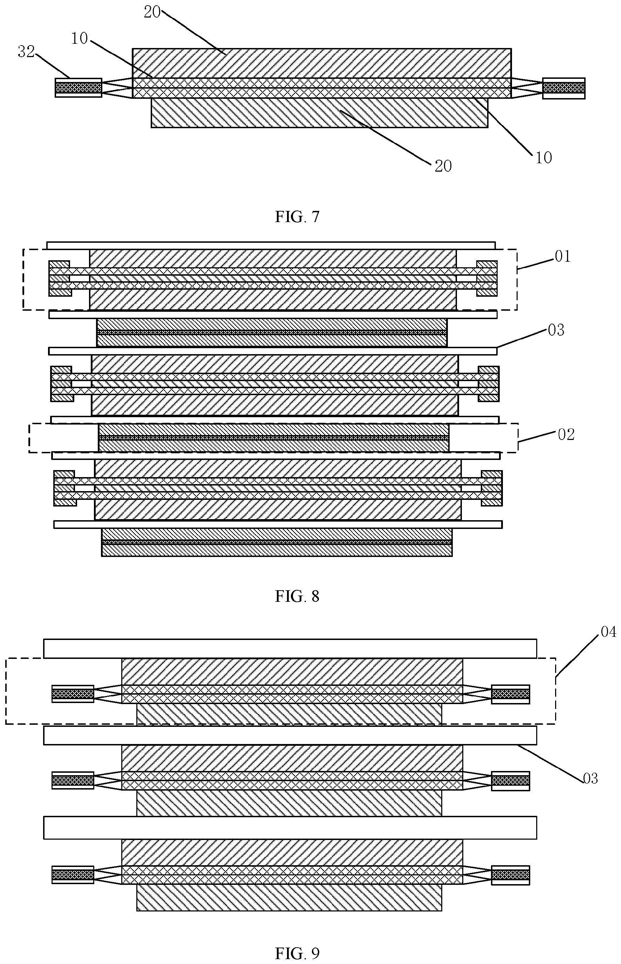

In some embodiments, as shown in FIG. 6 and FIG. 7, one of the two single electrode sheets is a positive electrode sheet, and another one of the two single electrode sheets is a negative electrode sheet, alternatively, the current collector 10 of the positive electrode sheet is an aluminum foil, and the current collector 10 of the negative electrode sheet is a copper foil. The compound electrode sheet formed by the embodiment is a series electrode sheet, so that there is only need that the electrode tabs being led out of the positive electrode sheet and the negative electrode sheet of the outermost layer are connected with the external circuit when the cell is arranged, and the compound electrode sheet in the middle does not need to lead out an electrode tab. In addition, when the compound electrode sheet is applied to a secondary battery, the electrolyte uses a gel electrolyte or a solid electrolyte to insulate the ions between the positive and negative electrodes of the compound electrode sheet to avoid internal short circuits.

Of course, if the compound electrode sheet is used as a series electrode sheet, a lithium replenishment layer can also be arranged between the two single electrode sheets, and the current collector of the negative electrode sheet is arranged as a porous current collector to replenish lithium to the negative electrode.

The following is a schematic illustration of the preparing process of the compound electrode sheet shown in FIG. 6 and FIG. 7. Those skilled in the art may also produce a compound electrode sheet with the same structure as described above by means other than the present application.

FIG. 6 shows the production process of a compound electrode sheet:
The thermoplastic polymer glue is dissolved in the corresponding solvent to form a glue solution; the empty foil area on the edge of the current collector of the single electrode sheet is coated with thermoplastic polymer glue on one or two sides, and then the single electrode sheets that needs to be bonded is aligned, and the position where the glue solution is coated is heated to melt the thermoplastic polymer glue, so that the multi-layer single electrode sheets are bonded into a compound electrode sheet, and then the excess empty foil area is cut off by a die-cutting way. If the electrode tab is required to be arranged during the die-cutting, the electrode tab is reserved or the electrode tab is individually cut out.

FIG. 7 shows the production process of a compound electrode sheet:
The multi-layer single electrode sheets of the current collectors are aligned, the empty foil area on the edge of the current collector is encapsulated by fusing the metal foil through an ultrasonic welding. Then the welding area can be selectively coated with an insulating layer (not required) to cover the welding area, and the excess foil area is die-cut. If the electrode tab is required during the cutting, the electrode tab is reserved.

### [Electrode Assembly]

The electrode assembly includes electrode sheets and an isolation film, the electrode sheet includes the compound electrode sheet of any of the above. Since the compound electrode sheet of the present application avoids the problem of insufficient safety size reserved for the negative electrode sheet due to the relative slipping of the electrode sheets during assembling of the electrode sheets, thus the safety of the battery is improved.

When the function of the compound electrode sheet is different, the assembly mode of the electrode sheet is adjusted according to the assembly rules of the electrode assembly. In some embodiments, the compound electrode sheet is a compound negative electrode sheet 01, and the compound electrode sheet also includes a lithium layer, the current collector is a porous current collector, and the lithium layer is arranged between the main bodies of the two current collectors, as shown in FIG. 8, the electrode assembly includes a compound negative electrode sheet 01 and a double-sided positive electrode sheet 02 that are sequentially laminated and an isolation film 03 arranged between the compound negative electrode sheet 01 and the double-sided positive electrode sheet 02.

In some embodiments, one of the single electrode sheets in the compound electrode sheet 04 is a positive electrode sheet, and another one of the single electrode sheets is a negative electrode sheet, as shown in FIG. 9, the electrode assembly includes the compound electrode sheet 04 and the isolation film 03 arranged between the positive electrode sheet and the negative electrode sheet of the compound electrode sheet 04.

The term "laminated" refers to the relative position relationship between the compound electrode sheet and the isolation film, which can be obtained by winding or laminating.

For example, when the electrode assembly is a cell and the cell is a wound cell, the protrusion portions of the compound electrode sheet in the wound cell are arranged at both ends of the wound cell. When a plurality of protrusion portions are provided, the protrusion portions can be regularly distributed at both ends of the wound cell by controlling the spacing of the protrusion portions in the compound electrode sheet strip, for example, the protrusion portions is aligned as the alignment of the electrode tabs, and the electrode tab is arranged at the end of the protrusion portion away from the main body.

When the electrode assembly is a cell and the cell is a laminated cell, the protrusion portions of the compound electrode sheet in the laminated cell is arranged on any one or more side walls of the laminated cell. When a plurality of protrusion portions are provided, the protrusion portions can be regularly distributed at on the side wall of the laminated cell by controlling the spacing of the protrusion portions in each laminated compound electrode sheet, for example, the protrusion portions is aligned as the alignment of the electrode tabs, and the electrode tab is arranged at the end of the protrusion portion away from the main body.

The positive or negative electrode sheet of the compound electrode sheet as a single electrode sheet is the conventional electrode sheet structure of the lithium battery.

### [Positive electrode sheet]

The positive electrode sheet usually includes a positive current collector and a positive electrode film layer arranged on at least one surface of the positive current collector, and the positive electrode film layer includes a positive active material.

As an example, the positive current collector has two surfaces opposite to each other in the direction of its own thickness, and the positive film layer is arranged on either or both of the two surfaces of the positive current collector.

In some embodiments, the positive current collector may be a metal foil or a composite current collector. For example, as a metal foil, an aluminum foil can be used. The composite current collector may include a polymer material substrate and a metal layer formed on at least one surface of the polymer material substrate. The composite current collector can be formed by forming a metal material (aluminum, aluminum alloy, nickel, nickel alloy, titanium, titanium alloy, silver and silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive active material may adopt a positive active material known in the art for use in batteries. As an example, the positive active material may include at least one of the following materials: olivine structure containing lithium phosphate, lithium transition metal oxide and their respective modified compounds. However, the present application is not limited to these materials, and other traditional materials that can be used as positive active materials of the battery may also be used. These positive active materials can be used alone, or more than two can be combined. Examples of lithium transition metal oxides may include, but are not limited to, at least one of lithium cobalt oxides (e.g., LiCoO₂), lithium nickel oxides (e.g., LiNiO₂), lithium manganese oxides (e.g., LiMnO₂, LiMn₂O₄), lithium nickel-cobalt oxides, lithium manganese oxides, lithium nickel-cobalt oxides, lithium nickel-cobalt oxides, and lithium nickel-cobalt oxides (e.g., LiNi_{1/3}Co_{1/3}Mn_{1/3}O₂) (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁), lithium nickel-cobalt aluminum oxide (such as LiNi_{0.85}Co_{0.15}Al_{0.05}O₂) and their modified compounds, etc. Examples of olivine structures containing lithium phosphate may include, but is not limited to, at least one of lithium iron phosphate (such as LiFePO₄ (also referred to as LFP)), lithium iron phosphate and carbon composite material, lithium manganese phosphate (such as LiMnPO₄), lithium manganese phosphate and carbon composite material, lithium manganese iron phosphate, lithium manganese phosphate and carbon composite material.

In some embodiments, the positive electrode film layer optionally includes a binder. As an example, the binder may include at least one of a polyvinylidene fluoride (PVDF), a polytetrafluoroethylene (PTFE), vinylidene fluoride - tetrafluoroethylene - propylene terpolymer, a vinylidene fluoride - hexafluoropropylene terpolymer, a tetrafluoroethylene - hexafluoropropylene copolymer, and a fluorinated acrylate resins.

In some embodiments, the positive electrode film layer optionally includes a conductive agent. As an example, the conductive agent may include at least one of a superconducting carbon, an acetylene black, a carbon black, a Ketjen black, a carbon dot, a carbon nanotube, a graphene, and a carbon nanofiber.

In some embodiments, a positive electrode sheet may be prepared in following method: dispersing the above components (such as the positive active material, conductive agent, binder, and any other components) for preparing the positive electrode sheet in a solvent (e.g., N-methylpyrrolidone) to form a positive electrode slurry; coating the positive electrode slurry on the positive current collector, and obtaining the positive electrode sheet after drying, cold pressing and other processes.

### [Negative electrode sheet]

The negative electrode sheet includes a negative current collector and a negative electrode film layer arranged on at least one surface of the negative current collector, and the negative electrode film layer includes a negative active material.

As an example, the negative current collector has two surfaces opposite to each other in the direction of its own thickness, and the negative film layer is arranged on either or both of the two surfaces opposite the negative current collector.

In some embodiments, the negative current collector may be a metal foil or a composite current collector. For example, as a metal foil, a copper foil can be used. The composite current collector may include a polymer material substrate and a metal layer formed on at least one surface of the polymer material substrate. The composite current collector can be formed by forming a metal material (copper, copper alloy, nickel, nickel alloy, titanium, titanium alloy, silver and silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the negative active material may adopt a negative active material known in the art for use in batteries. As an example, the negative active material may include at least one of the following materials: an artificial graphite, a natural graphite, a soft carbon, a hard carbon, a silicon-based material, a tin-based material, and a lithium titanate. The silicon-based materials may be selected from at least one of an elemental silicon, a silicoxane, a silicon-carbon complex, a silicon-nitrogen complex, and a silicon alloy. The tin-based material may be selected from at least one of an elemental tin, a tin-oxygen compound and a tin alloy. However, the present application is not limited to these materials, and other traditional materials that can be used as negative battery active materials may also be used. These negative active materials can be used alone, or more than two can be used in combination.

In some embodiments, the negative electrode film layer optionally includes a binder. As an example, the binder may be selected from at least one of a styrene butadiene rubber (SBR), a polyacrylic acid (PAA), a sodium polyacrylate (PAAS), a polyacrylamide (PAM), a polyvinyl alcohol (PVA), a sodium alginate (SA), a polymethacrylic acid (PMAA), and a carboxymethyl chitosan (CMCS).

In some embodiments, the negative electrode film layer optionally includes a conductive agent. As an example, the conductive agent may include at least one of a superconducting carbon, an acetylene black, a carbon black, a Ketjen black, a carbon dot, a carbon nanotube, a graphene, and a carbon nanofiber.

In some embodiments, the negative electrode film layer optionally includes other auxiliaries, such as thickeners (e.g., sodium carboxymethyl cellulose (CMC-Na)), etc.

In some embodiments, a negative electrode sheet may be prepared in following method: dispersing the above components (such as the negative active material, conductive agent, binder and any other components) for preparing the negative electrode sheet in a solvent (e.g., deionized water) to form a negative electrode slurry; coating the negative electrode slurry on the negative current collector, and obtaining the negative electrode sheet after drying, cold pressing and other processes.

### [Electrolyte]

The electrolyte conducts ions between the positive and negative electrode sheets. There are no specific restrictions on the types of electrolytes in the present application, which can be selected according to demand. For example, the electrolyte can be liquid, gel, or all solid.

In some embodiments, the electrolyte is liquid and includes electrolyte salts and solvents.

In some embodiments, the electrolyte salt may be selected from at least one of a lithium hexafluorophosphate, a lithium tetrafluoroborate, a lithium perchlorate, a lithium hexafluorarsenate, a lithium difluorosulfonimide, a lithium trifluoromethosulfonimide, a lithium trifluoromethosulfonimide, a lithium difluorophosphate, a lithium difluoroxalate borate, a lithium dioxalate borate, a lithium dioxalate phosphate, and a lithium tetrafluoroxalate phosphate.

In some embodiments, The solvent may be selected from at least one of an ethyl carbonate,a propylidene carbonate, a methyl ethyl carbonate, a diethyl carbonate, a dimethyl carbonate, a dipropyl carbonate, a methyl propyl carbonate, an ethylene propyl carbonate, a butylene carbonate, an ethyl fluorocarbonate, a methyl formate, a methyl acetate, an ethyl acetate, a propyl acetate, a methyl propionate, an ethyl propionate, a propionate, a methyl propionate, a methyl propionate, a propionate, a methyl butyrate, an ethyl butyrate, a 1, 4-butyrolactone, a sulfolane, a dimethyl sulfone, a methyl ethyl sulfone, and a diethyl sulfone.

In some embodiments, the electrolyte optionally includes an additive. As an example, the additive can include a negative film forming additive and a positive film forming additive, and can also include additives that can improve certain properties of the battery, such as additives to improve the overcharge performance of the battery, and additives to improve the high or low temperature performance of the battery.

### [Isolation film]

In some embodiments, the secondary battery is further includes the isolation film. There is no special restriction on the type of isolation film in the present application, and any well-known porous structure isolation film with good chemical stability and mechanical stability can be selected.

In some embodiments, the material of the isolation film may be selected from at least one of a glass fiber, a non-woven fabric, a polyethylene, a polypropylene, and a polyvinylidene fluoride. The isolation film can be a single layer film or a multi-layer composite film, with no special restrictions. When the isolation film is the multi-layer composite film, the material of each layer can be the same or different without special restrictions.

In some embodiments, the electrode sheets and the isolation films can be prepared into the electrode assembly by a winding process or a lamination process.

In some embodiments, the secondary battery may include an outer packaging. The outer package can be used to encapsulate the electrode assembly and the electrolyte.

In some embodiments, the outer packaging of the secondary battery can be a hard shell, such as a hard plastic shell, an aluminum shell, a steel shell, etc. The outer packaging of the secondary battery can also be a soft packaging, such as a bag soft packaging. The material of the soft packaging can be a plastic, such as, a polypropylene, a polybutylene terephthalate and a polybutylene succinate, etc..

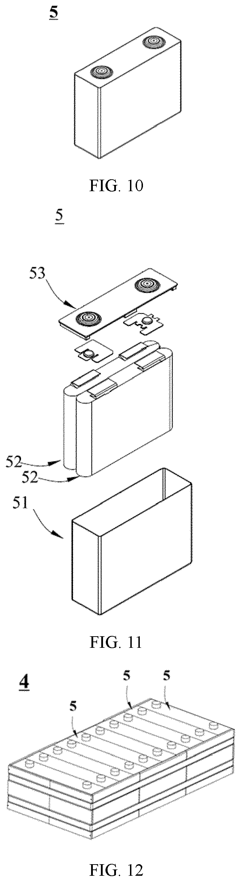

The present application has no special restrictions on the shape of the secondary battery, which can be a cylindrical, a square or any other arbitrary shape. For example, FIG. 10 is used as an example of the square structure of a secondary battery 5.

In some embodiments, as shown in FIG. 11, the outer packaging may include a shell 51 and a cover plate 53. The shell 51 can include a bottom plate and a side plate connected to the bottom plate, and the bottom plate and the side plate are enclosed to form an accommodating cavity. The shell 51 is provided with an opening communicated with the accommodating cavity, and the cover plate 53 can be covered with the opening to close the accommodating cavity. The positive electrode sheet, the negative electrode sheet and the isolation film can be formed into the electrode assembly by a winding process or a lamination process. The electrode assembly 52 is enclosed in the accommodating cavity. The electrolyte is infiltrated in the electrode assembly 52. The number of electrode assemblies 52 contained in the secondary battery 5 can be one or more, and those skilled in the art can choose according to the actual needs.

In some embodiments, the secondary battery can be assembled into a battery module, and the number of secondary batteries contained in the battery module may be one or more, and the specific number may be selected by those skilled in the art according to the application and capacity of the battery module.

FIG. 12 is shown as an example of a battery module 4. In the battery module 4, a plurality of secondary batteries 5 can be arranged along a length direction of the battery module 4, as shown in FIG. 12. Of course, it can be arranged any other way. The plurality of secondary batteries can be further fixed by fasteners.

Optionally, the battery module 4 can also include a housing with an accommodating space in which the plurality of secondary batteries 5 are accommodated.

In some embodiments, the battery module can also be assembled into a battery pack, the number of battery modules contained in the battery pack can be one or more, and the specific number may be selected by those skilled in the art according to the application and capacity of the battery pack.

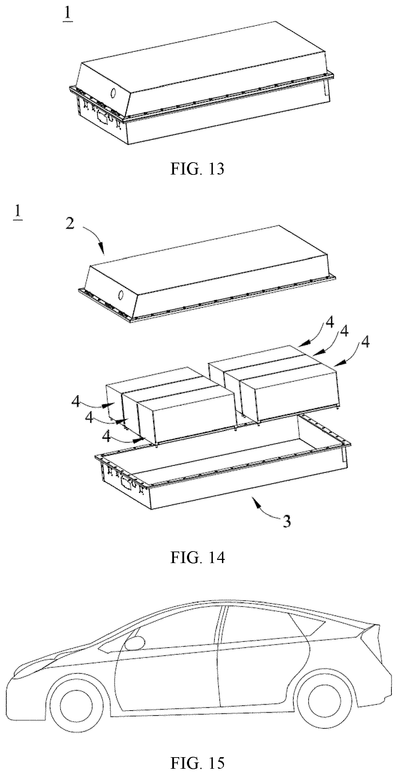

FIG. 13 and FIG. 14 are an example of the battery pack 1. As shown in FIG. 13 and FIG. 14, the battery pack 1 can include a battery box and a plurality of battery modules 4 arranged in the battery box. The battery box includes an upper box body 2 and a lower box body 3. The upper box body 2 can be covered on the lower box body 3 and form a closed space for accommodating the battery module 4. The plurality of battery modules 4 can be arranged in the battery box in any way.

In addition, the present application provides an electrical device including at least one of the secondary battery, the battery module, and the battery pack provided in the present application. The secondary battery, the battery module, or the battery pack can be used as a power source of the electrical device, and can also be used as an energy storage unit of the electrical device. The electric device may include a mobile device (such as a mobile phone, a laptop, etc.), an electric vehicle (such as a pure electric vehicle, a hybrid electric vehicle, a plug-in hybrid electric vehicle, an electric bicycle, an electric scooter, an electric golf cart, an electric truck, etc.), an electric train, a ship and a satellite, an energy storage system, etc., but not limited to this.

As the electrical device, the secondary battery, the battery module or the battery pack can be selected according to the actual needs.

FIG. 15 is an example of an electrical device. The electric device is a pure electric vehicle, a hybrid electric vehicle, or a plug-in hybrid electric vehicle, etc. In order to meet the high power and high energy density requirements of the secondary battery of the electrical device, the battery packs or battery modules can be used.

### [Examples]

Embodiments of the present application are explained below. The embodiments described below are illustrative and are intended only to interpret the present application and are not to be construed as a limitation of the present application. Where the specific technology or conditions are not indicated in the embodiment, the technology or conditions described in the literature in the field or in the product specification shall be followed. The reagents or instruments used, where the manufacturer is not indicated, are conventional products that can be obtained through market purchase.

### Example 1

For the laminated cell, the structure of the electrode assembly is shown in FIG. 8. The electrode assembly is laminated according to the sequence of "isolation film/compound negative electrode sheet/isolation film/positive plate/isolation film". The lithium nickel cobalt manganese oxide LiNi_{0.8}Co_{0.1}Mn_{0.1}O₂ (NCMsn), the conductive agent acetylene black, the binder polyvinylidene fluoride (PVDF) is mixed according to the mass ratio of 96:2:2, and then are fully stirred in the solvent NMP to form a uniform positive slurry. The positive electrode slurry is coated on the surface of the positive current collector aluminum foil, and the positive electrode sheet is obtained after drying, cold pressing and cutting. The compound negative electrode sheet is composed of two single-sided negative electrode sheets and a metal lithium layer in the middle of the sandwich layer. The current collector of the negative electrode sheet is provided with an annular protrusion portion, the single-sided negative electrode sheet is made of a graphite, a silicon oxide (the mass ratio of silicon in the negative active material layer is about 30%), a binder styrene butadiene rubber (SBR), a thickening agent sodium carbomethylcellulose (CMC), and a conductive agent carbon nanotube, which are fully mixed in deionized water according to the mass ratio of 65:30:3:1:1 to form a uniform negative electrode slurry. The negative electrode sheet is obtained by coating the negative electrode slurry on the main surface of the copper foil of the negative porous current collector through drying, cold pressing and cutting. The pure lithium metal layer between the two single-sided negative electrode sheets is attached to the surface of the negative current collector surface by the way of lithium strip rolling, and the thickness is 5µm. The edge annular protrusion portion of the porous negative current collector is bonded with a 5mm wide polypropylene thermoplastic synthetic resin with a thickness of about 20µm by MPP. After two single-sided negative electrode sheets and lithium metal layers are laminated, the edge annular protrusion portion is heated and pressurized to make the polypropylene hot melt bonded encapsulating. After cooling, the excess part is cut off and the width of the annular protrusion portion is reserved. The electrolyte uses 1.OM LiPF₆ lithium salt and EC: DMC: EMC= 1:1:1 solvent. The isolation film is made of 12µm thick polyethylene isolation film, and each side is coated with 3µm thick alumina ceramic layer.

### Example 2

For a laminated cell, the structure of the electrode assembly is shown in FIG. 8. The positive and negative electrode sheet, the lithium layer, the electrolyte, and laminating mode are the same as in Example 1. The difference is that there is no polypropylene thermoplastic synthetic resin on the edge of the compound negative electrode sheet. Ultrasonic wave with power of 100W and welding energy of 600J are used to weld and fuse the edge annular protrusion portion after the two single-sided negative electrode sheets and the lithium metal layer are laminated, and the welding width was 5mm. The welding area is then coated with an inorganic insulating layer composed of 90% Boehmite and 10% polyvinylidene fluoride adhesive, the thickness of which is about 2µm. Finally, the excess part is cut off and the width of the annular protrusion portion about 2mm wide is reserved.

### Example 3

For a laminated cell, the structure of the electrode assembly is shown in FIG. 9. The positive and negative electrode sheet, the lithium layer, the electrolyte, and laminating mode are the same as in Example 1. The difference is that the positive and negative electrodes are all single-sided electrode sheets, the compound electrode sheets are "single-sided positive electrode sheet/single-sided negative electrode sheet", the upper layer with wider coating film area is the single-sided negative electrode sheet, and the negative current collector is copper foil. The lower layer with narrower coating film area is the single-sided positive, and the positive current collector is aluminum foil. The cell is laminated according to the sequence of "isolation film/ compound electrode sheet/isolation film/ compound electrode sheet/isolation film". The upper negative electrode sheet and the lower positive electrode sheet lead out electrode tabs to connect the external circuit, and the compound electrode sheet in the middle no longer leads out the electrode tab, and the electrolyte is solid electrolyte composed of 75% ionic conductor material lithium LAN zirconium oxygen LLZO, 20% polyethylene oxide PEO, and 5% LiClO₄, to ensure that the ion insulation between the positive and negative electrodes of the compound electrode sheet and avoid the internal circuit shorts.

### Example 4

For a laminated battery, the structure of the electrode assembly is shown in FIG. 9. The compound electrode sheet, the solid electrolyte and laminating mode of the cell are same as in Example 3, and encapsulating of the edge protrusion portion of the compound electrode sheet is same as in Example 2, that is, the same ultrasonic welding package and coated insulating layer is used to encapsulate the compound electrode sheet.

### Comparison example 1

The electrode assembly is directly laminated in the sequence of "single-sided positive electrode sheet/isolation film/single-sided negative electrode sheet/lithium layer/single-sided negative electrode sheet/isolation film/single-sided positive electrode sheet", and the composition of the positive electrode sheet, the composition of the negative electrode sheet, the composition of the lithium layer, the composition of the isolation film, and the electrolyte are the same as in Example 1.

### Comparison example 2

The electrode assembly is directly laminated in the sequence of "isolation film/single-sided positive electrode/lithium layer/single-sided negative electrode/isolation film", and the composition of the positive electrode sheet, the composition of the negative electrode sheet, the composition of the isolation film, and the solid electrolyte are the same as in Example 3.

### The first coulomb efficiency of the laminated cells are tested as follows:

The laminated cell is charged at 1/3C constant current to 4.25V, then is charged at constant voltage to 0.05C, and then is discharged at 1/3C constant current to 2.8V to record the charging capacity and discharge capacity of the laminated cell, and calculated the first coulomb efficiency of the battery = first discharging capacity/first charging capacity.

The test results are recorded in Table 1.

**Table 1**

| | first coulomb efficiency(%) |
|---|---|
| Example 1 | 89 |
| Example 2 | 87 |
| Example 3 | 80 |
| Example 4 | 79 |
| Comparison example 1 | 83 |
| Comparison example 2 | 79 |

According to the comparison of Examples 1 and 2 with Comparison example 1, it can be found that compared with the directly laminated electrode sheets, the encapsulated compound electrode sheets can better protect the sandwich lithium layer from the erosion loss of the surrounding electrolyte, and maintain better electrical contact, so as to better play the lithium replenishment effect, and the first coulomb efficiency of the laminated battery is significantly improved. Moreover, according to the comparison of Examples 3 and 4 and the Comparison example 2, it can be seen that the relative slipping of the electrode sheets can be effectively avoided and the first coulomb efficiency of the battery can be maintained when the series electrode sheets formed by the compound electrode sheets are used as the basic composition structure of the cell.

Although the present application has been described with reference to preferred embodiments, various improvements may be made to it and its parts may be replaced with equivalents without leaving the scope of the present application. In particular, the technical features referred to in the various embodiments may be combined in any manner provided that there is no structural conflict. The present application is not limited to specific embodiments disclosed herein, but includes all technical solutions falling within the scope of the claims.

## Claims

1. A compound electrode sheet, comprising two single electrode sheets, and each single electrode sheet comprising:
a current collector, provided with a main body and a protrusion portion, wherein the protrusion portion is arranged protruding out of the main body in an extension direction of the current collector, and the protrusion portions of two current collectors are fixedly connected; and
an active material layer, arranged on a surface of the main body;
wherein the active material layers of the two single electrode sheets are arranged opposite to each other.

2. The compound electrode sheet according to claim 1, wherein the protrusion portions of the two current collectors are fixedly connected through an adhesive layer; alternatively, the adhesive layer is a thermoplastic polymer adhesive layer; alternatively, the thermoplastic polymer adhesive layer is selected from any one of a thermoplastic polypropylene adhesive layer, a thermoplastic aliphatic polyether polyurethane adhesive layer, a thermoplastic polyimide adhesive layer, and a thermoplastic vinyl distearamide adhesive layer; alternatively, the adhesive layer is filled between the protrusion portions, and/or the adhesive layer wraps the protrusion portions.

3. The compound electrode sheet according to claim 1, wherein the protrusion portions of the two current collectors are welded.

4. The compound electrode sheet according to claim 1, wherein the compound electrode sheet further comprises an insulating layer wrapping a welding area of the protrusion portion; alternatively, the insulating layer comprises an inorganic filler and a binder; alternatively, the inorganic filler is selected from any one or more of a boehmite and a ceramic material; alternatively, the insulating layer comprises 80% to 95% of the inorganic filler and 5% to 20% of the binder in percentage by weight.

5. The compound electrode sheet according to any one of claims 1 to 4, wherein a plurality of protrusion portions are provided and spaced apart from each other; alternatively, the protrusion portions are arranged on at least one or more sides of the main body; alternatively, a fixed connection area of each protrusion portion is in a range of 8mm² and 50mm², alternatively, a shape of the protrusion portion is a quadrilateral, and more alternatively, the shape of the protrusion portion is a rectangular.

6. The compound electrode sheet according to any one of claims 1 to 4, wherein the protrusion portion is continuously arranged along a circumferential direction of the main body to form an annular protrusion portion, and the annular protrusion portions of the two current collectors are continuously fixed and connected in the circumferential direction; alternatively, a width of the annular protrusion portion is in a range of 2mm and 5mm.

7. The compound electrode sheet according to any one of claims 1 to 6, wherein the compound electrode sheet further comprises a lithium layer, the current collectors are porous current collectors, the lithium layer is arranged between the main bodies of the two current collectors, and the two single electrode sheets are negative electrode sheets.

8. The compound electrode sheet according to claim 7, wherein the current collector is further provided with an electrode tab, and the electrode tab is arranged on the main body or is arranged on a part of an end of the protrusion portion away from the main body; alternatively, the main body, the protrusion portion, and the electrode tab are arranged integrally.

9. The compound electrode sheet according to any one of claims 1 to 6, wherein one of the two single electrode sheets is a positive electrode sheet, and another one of the two single electrode sheets is a negative electrode sheet, alternatively, the current collector of the positive electrode sheet is an aluminum foil, and the current collector of the negative electrode sheet is a copper foil.

10. An electrode assembly, comprising electrode sheets and an isolation film, wherein each of the electrode sheets comprises the compound electrode sheet according to any one of the claims 1 to 8.

11. The electrode assembly according to claim 10, wherein the compound electrode sheet is a compound negative electrode sheet, the compound electrode sheet further comprises a lithium layer, the current collector is porous current collector, and the lithium layer is arranged between the main body of the current collector; the electrode assembly comprises the compound negative electrode sheet, a double-sided positive electrode sheet, and the isolation film arranged between the compound negative electrode sheet and the double-sided positive electrode sheet that are sequentially laminated.

12. The electrode assembly according to claim 10, wherein one of the single electrode sheets in the compound electrode sheet is a positive electrode sheet, and another one of the single electrode sheets is a negative electrode sheet, and the electrode assembly comprises the compound electrode sheet which is sequentially laminated and the isolation film arranged between the positive electrode sheet and the negative electrode sheet of the compound electrode sheet.

13. The electrode assembly according to claim 10, wherein the electrode assembly is a cell;
the cell is a wound cell, and the protruding portion of the compound electrode sheet in the wound cell is arranged at both ends of the wound cell; or
the cell is a laminated cell, and the protruding portion of the compound electrode sheet in the wound cell is arranged at any one or more side walls of the laminated cell.

14. A secondary battery, comprising the compound electrode sheet according to any one of claims 1 to 9 or the electrode assembly according to any one of the claims 10 to 13.

15. An electrical device, comprising a secondary battery, wherein the secondary battery is selected from the secondary battery according to claim 14.
